# EUROPEAN PATENT APPLICATION

(11) **EP 1 895 434 A1**
(43) Date of publication of application: **05.03.2008**
(21) Application number: 07015910.8
(22) Date of filing: 13.08.2007
(51) Int. Cl.: G06F 17/30

(54) **Multimedia system framework having layer consolidation access to multiple media devices**

(30) Priority: 31.08.2006 US 841659 P; 19.06.2007 US 765258; 25.08.2006 US 840246 P
(71) Applicant: QNX Software Systems GmbH & Co. KG, 76307 Karlsbad (DE)
(72) Inventor: Cardamore, Daniel, Ottawa, Ontario K2C 3C4 (CA); Poliak, Andrew, Lake Seven, Washington 98258 (US)
(74) Representative: Grünecker, Kinkeldey, Stockmair & Schwanhäusser Anwaltssozietät

(57) **Abstract**

A multimedia system is set forth that comprises a multimedia engine, a database, and a human machine interface. The multimedia engine may be adapted to access multimedia files from a plurality of multimedia data sources for playback on one or more of a plurality of multimedia output devices. The database may be adapted to store information relating to multimedia files stored on the plurality of multimedia data sources. The multimedia file information from the plurality of multimedia data sources may be consolidated in a commonly accessible format in the database. The human machine interface may be adapted to provide a graphical interface to information stored on the database for playback of corresponding multimedia files from the plurality of multimedia data sources.

## Description

### BACKGROUND OF THE INVENTION

### 1. Cross-reference to Related Applications.

This application claims priority to United States Provisional Application No. 60/841,659, filed August 31, 2006, which is hereby incorporated by reference.

### 2. Technical Field.

The invention relates to the field of multimedia systems, and in particular, to a multimedia system framework that has a layer consolidating access to multiple media devices with diverse media sets.

### 3. Related Art.

Multimedia systems may employ multiple media players for playback of multimedia content. Such players include cell phones with Secure Digital (SD) Cards that play encoded music files, Sony PlayStationPortable units that use Sony Memory Stick technology for storage and playback of encoded music files, iPod® devices that employ internal hard disk drives for storage and playback of media files, including video media files, and other media players, including those that employ Universal Serial Bus (USB) flash memory. Media files may be encoded on these devices using a variety of different formats such as MPEG layer III (MP3) encoding, Windows Media Audio (WMA) encoding, Windows Media Video encoding, RealAudio encoding, RealVideo encoding, DVD video, CD audio, and the like.

In such systems, a user first identifies the device from which a media file is to be played and then the specific media file on the device for playback. When a number of different players are attached to the system, each having a large number of media files, it becomes very difficult for the user to keep track of the devices on which the desired media file is stored. License rights of music or video that restrict certain items to be played from specific devices further complicate the problem of locating and playing the desired item. Segmenting media based on its physical location, as is common on current vehicle media systems, also may give rise to safety risks because of the distractions that may occur when the end user attempts to locate media from a variety of sources while driving the vehicle.

Multimedia systems, such as those used in vehicles, address the content of the attached media devices using the metadata contained within each media device. Accordingly, content playback involves selecting the media device and browsing the retrieved metadata from the device. Once the desired content is identified by the user from displayed metadata, it may be played back through the multimedia system.

Therefore, as end users increase the number of media devices attached to a multimedia system, subscribe to entertainment services, and have access to multiple storage locations, all of which may require the performance of similar functions, the location and playback of content with reduced involvement of the user becomes increasingly important. Accordingly, there is a need in the industry for the development of a more effective multimedia framework for identifying and accessing media content from multiple devices in a multimedia system.

### SUMMARY

A multimedia system is set forth that comprises a multimedia engine, a database, and a human machine interface. The multimedia engine may be adapted to access multimedia files from a plurality of multimedia data sources for playback on one or more of a plurality of multimedia output devices. The database may be adapted to store information relating to multimedia files stored on the plurality of multimedia data sources. The multimedia file information from the plurality of multimedia data sources may be consolidated in a commonly accessible format in the database. The human machine interface may be adapted to provide a graphical interface to information stored on the database for playback of corresponding multimedia files from the plurality of multimedia data sources.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a block diagram illustrating one manner of implementing a multimedia system having consolidated access to files on multiple media devices.

Figure 2 is a functional block diagram showing detailed components that may be employed to implement the system shown in Figure 1.

Figure 3 is a flowchart illustrating a number of interrelated operations that may be used to implement the MSS module shown in Figure 2.

Figure 4 is a flowchart illustrating a number of interrelated operations that may be used to populate the media file synchronization table.

Figure 5 is a flowchart illustrating a number of interrelated operations that may be executed to execute the metadata synchronization referenced in Figure 3.

Figure 6 is a flowchart illustrating a number of interrelated operations that may be executed to implement the playlist synchronization referenced in Figure 5.

Figure 7 is a table illustrating exemplary fields that may be employed in media file records of the database shown in Figure 2.

Figure 8 is a table illustrating exemplary fields that may be employed in playlist file records of the database shown in Figure 2.

Figure 9 is a table illustrating exemplary fields that may be employed in a media stores table of the database shown in Figure 2.

Figure 10 is a table illustrating exemplary fields that may be employed in a slots table of the database shown in Figure 2.

### DETAILED DESCRIPTION OF THE PREFERRED EMBODIMENTS

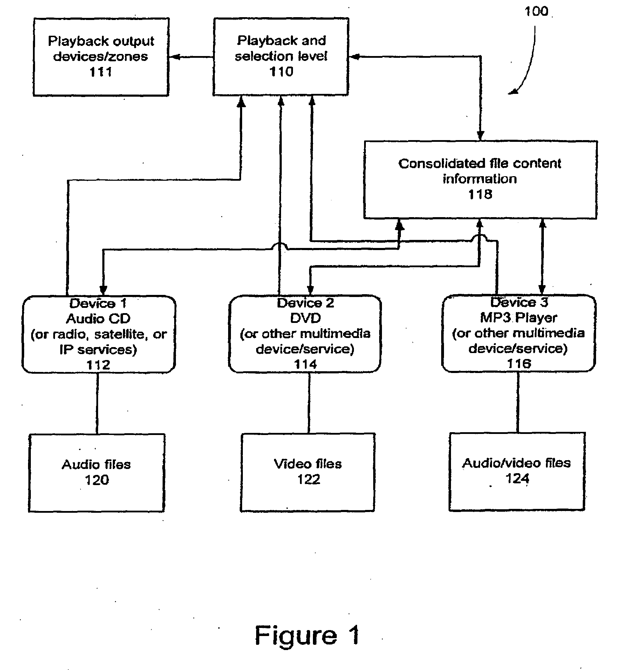

Figure 1 is a block diagram illustrating one manner of implementing a multimedia system 100 having consolidated access to files on multiple media devices. As shown, system 100 may have a media playback and selection level 110 that, for example, provides high level interaction between multiple media devices in system 100 and a further software interface level or user. The media playback and selection level 110 facilitates selection of media files from multiple devices and allows playback of selected media files through output devices that are located in one or more playback zones 111.

In the exemplary system shown in Figure 1, three media devices are attached to system 100. A first device 112 may be comprised of an audio CD in a CD player attached to system 100 and also may include one or more audio files 120 that may be selected for playback through output devices in one or more zones 111 of the system 100. A second device 114 may be comprised of a DVD disk in a DVD player attached to system 100 and may include one or more video files 122 that may be selected for playback through output devices in one or more zones 111 of the system 100. A third device 116 may be comprised of an MP3 player attached to system 100 and may include one or more audio/video files 124 that may be selected for playback through output devices of the playback zones 111 of the system 100.

Information relating to the media files 120, 122, and 124, from devices 112, 114, and 116, is consolidated for access by level 110 at a consolidated file content information level 118. Access to this information by the media playback and selection level 110 may be obtained without *a priori* knowledge of the media device on which the corresponding media file is located. A media file may be selected for playback at the media selection and playback level 110, for example, by media name, media genre, artist, playlist name, and the like, without regard to the locations of the corresponding files. For example, a user may request playback of all media files having a genre of "Country" and the media selection and playback level 110 will proceed to locate and playback all media files identified at the consolidated file content information level 118 independent of the device(s) on which the files are located.

The consolidated file content information level 118 may dynamically detect any new devices as they are attached in system 100. Upon identification of the newly added device, information relating to the corresponding media file contents is identified and included, for example, in a file content information database at level 118.

From an implementation point of view, it is possible to divide the information in the consolidated file content information level 118 into multiple components, each of which may reside on one or more of devices. In this exemplary implementation, media playback and selection level 110 may navigate the information stored in these components as if the information were stored in a single database.

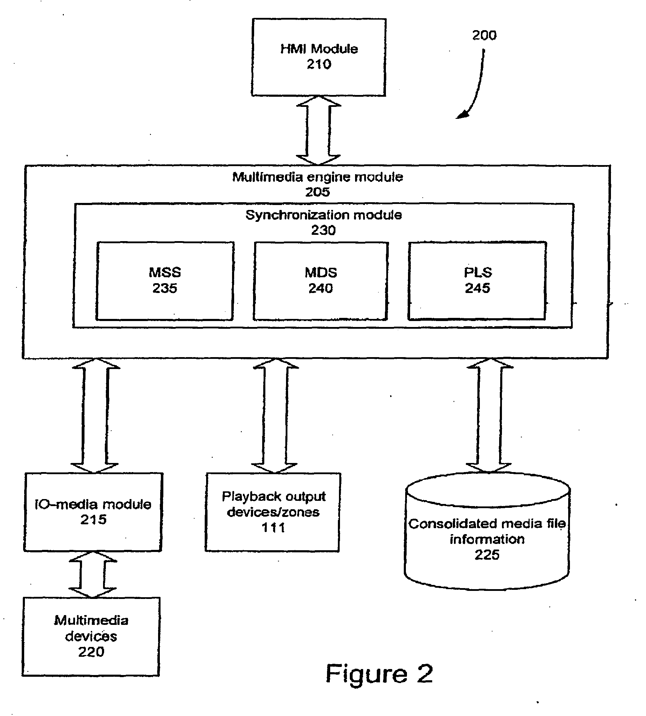

Figure 2 is a functional block diagram showing detailed components that may be employed to implement the system shown in Figure 1. The exemplary system 200 may include a Multimedia Engine (MME) module 205 that interacts with a human machine interface (HMI) module 210 as well as interacting with an IO media module 215 that provides an interface between a plurality of different multimedia devices 220 and the MME module 205. The HMI module 210 provides an interface that may include multimodal user inputs such as voice, touch buttons and touch screens that are employed by the user to identify the content to be played and to request certain playback operations. The information acquired by the HMI module 210 as a result of these user interactions is passed to the MME module 205. The MME module 205 obtains media file information for a requested file name, file type, genre, artist, etc., using metadata from consolidated media file information stored, for example, in a database 225. Database 225 is used by the MME module 205 to store and retrieve metadata for media files that client applications, such as the HMI module 210, access. The client applications may use this information to display media files to a user or otherwise arrange for playback of the media files in a desired manner. Database 225 may support multiple connections from multiple clients in a concurrent manner. The information in database 225 may be divided between multiple files. Each database file can be stored in RAM, flash, or hard drives in a configurable manner that does not affect access by higher level applications.

Although the media files may reside on different types of devices in different formats, the metadata for each file may be stored using a single format on the database 225. As a result, the media file contents from different incompatible devices attached to the system may be brought into the ambit of one controllable and browseable interface so that HMI module 210 can be used with all MME supported media file types and devices. HMI designers need only understand the data format used by the database 225 to access and play all media files in the system 200. Additionally, by using the database tables and identifiers of database 225, the HMI module 210 can be designed to reference content and issue generic 'play', 'pause' type commands for all the supported devices despite the diversity of the device types and media formats.

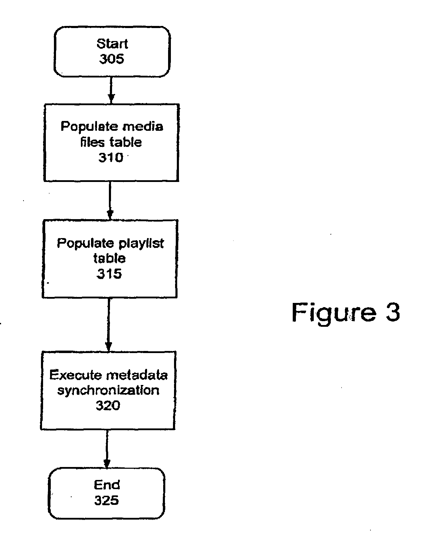

The MME module 205 may include a synchronization module 230 that is used for real time synchronization of metadata available on various media. There are three components used for metadata synchronization in the exemplary system 200: a Media Storage Synchronizer (MSS) module 235, a Metadata Synchronizer (MDS) module 240, and a Playlist Synchronizer (PLS) module 245. Exemplary manners of using and implementing these synchronization modules are shown in Figures 3 through 6.

The MSS module 235 is used whenever there is a need for metadata synchronization, e.g., after a device has been plugged into the system. Figure 3 is a flowchart illustrating a number of interrelated operations that may be used to implement the MSS module 235. When started at block 305, the MSS module 235 records the particulars of the files to be synchronized in a media files table by executing the operation shown at block 310. Information regarding the playlists that need synchronization is recorded in a playlist sync table by the operations shown at block 315. The actual metadata synchronization occurs in the operation represented at block 320 before any final operations are executed at block 325.

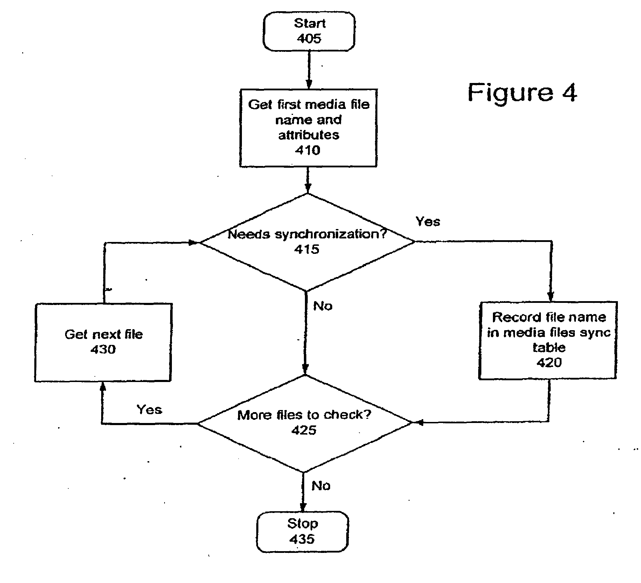

Figure 4 is a flowchart illustrating a number of interrelated operations that may be used at block 310 of Figure 3 to populate the media file sync table. Upon initialization of the operation at block 405, the file name and attributes of the first file on the media being synchronized are obtained at the operation represented at block 410. The file name and one or more file attributes, such as the time stamp on the file and its size, are compared with the information stored on the database 225. If these attributes stored on the media are different from those stored on the database 225, the system assumes at block 415 that the metadata for this media file needs synchronization. Otherwise, no synchronization is required. If the media file metadata needs synchronization, the file name is added to the media files sync table at block 420. Whether or not there are more files to check is tested at block 425. If there are more files to check, the name and attributes of the next file are obtained at block 430, and control is returned to the operation at block 415. Otherwise final operations, if any, are executed at block 435.

After execution of the operations shown in Figure 4, the media files sync table contains a list of all the media files that need synchronization. The sequence of occurrence of a file in the table depends on whether a "breadth-first" or a "depth-first" approach for synchronization is chosen by the system designer. A "breadth-first" synchronization begins at the media store root directory and progresses level by level. During synchronization, the nodes at a given level are processed first, and then the nodes at the next level are considered. In this way, all directories at the same depth or level are synchronized before directories deeper in the tree are examined. A "depth-first" synchronization on the other hand starts at the media store root directory, and begins traversing the first node it finds before going deeper in the directory structure examining sub-nodes as it finds them. For example, in a root directory with two sub-directories, all the members of the first found sub-directory that need synchronization are recorded first in the media files sync table before the second directory is examined.

During "breadth-first" synchronization, facilities are provided for prioritizing folders/files. With such a facility, the folders/files at each level are displayed to the user at the same time as "breadth-first" synchronization progresses. A user may click on any of these folders/files or go inside any of the folders and click any item inside that needs to be synchronized first. On identification of such a high priority folder/file the synchronization of the current folder/file in progress is preempted and the higher priority folder/file is synchronized first. On completion of the synchronization of this higher priority folder/file the synchronization of the preempted folder/file is resumed.

A procedure similar to the one described in Figure 4 is used at block 315 of Figure 3, where playlist files are reviewed for synchronization as opposed to media files. After the playlist sync table has been synchronized at block 315, it contains a list of all playlist files that need synchronization.

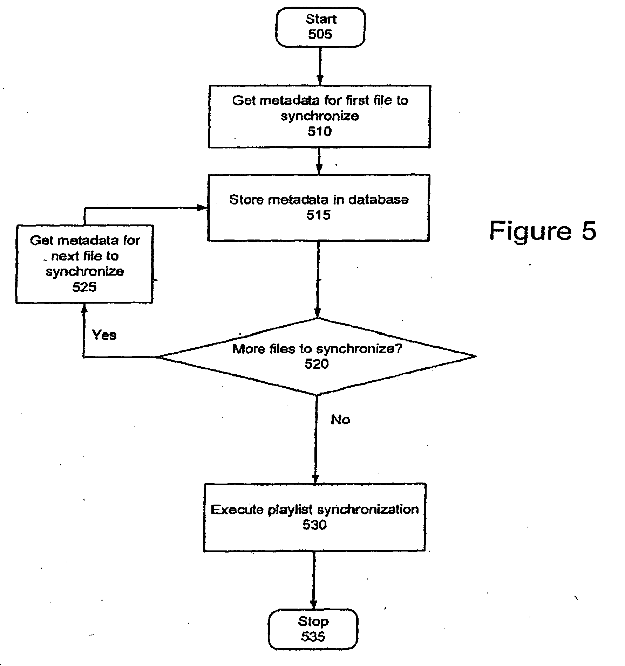

Figure 5 is a flowchart illustrating a number of interrelated operations that may be executed to implement the task shown at block 320 of Figure 3. Upon starting at block 505, the metadata for the first file to be synchronized is obtained from the media file sync table at block 510. The metadata retrieved from the media file sync table is stored in the database 225 at block 515. Whether or not there are more files to be synchronized is determined in the operation represented at block 520. If there are more files to be synchronized, the metadata for the next file to be synchronized is obtained from the media file sync table at block 525 and the retrieved metadata is stored in the database 225 at block 515. These operations are repeated until all media files identified in the media file sync table have been added to the database 225. Once all media files identified in the media file sync table have been synchronized in the database 225, synchronization of the playlists identified in the playlist sync table takes place at block 530 before final operations are executed at block 535.

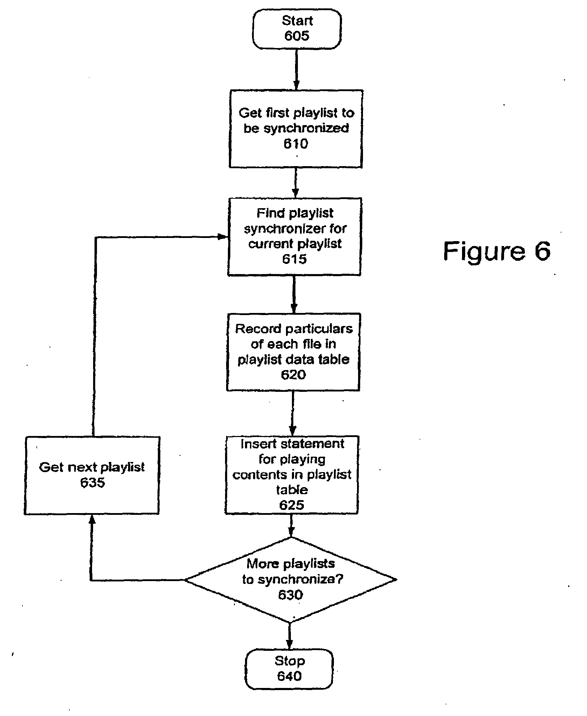

Figure 6 is a flowchart illustrating a number of interrelated operations that may be executed to implement the task shown at block 530 of Figure 5. Upon starting at block 605, the first playlist to be synchronized is obtained from the playlist sync table at block 610. The playlist synchronizer that is adapted to handle the current playlist is identified at block 615. The particulars of each file in the playlist are recorded in a playlist data table stored on the database 225 in the operation at block 620. The information recorded for each file includes the file id (fid), the playlist id (plid) and the order id (oid) that specifies the order in which the file is to be played. An appropriate statement is then inserted in the playlist table in database 225 for playing the contents specified in the playlist at block 625. For example, on a system that uses SQL, a statement such as 'SELECT fid FROM playlistdata WHERE plid=%d ORDER BY oid' may be used. As the processing of the current playlist is completed, the a check is made at block 630 to determine whether there are more playlists in the playlist sync table that are in need of synchronization in the database 225. If more playlists need synchronization, the next playlist to be processed is obtained from the playlist sync table at block 635 and control returns to the operation shown at block 615. Otherwise, final operations are executed at block 640.

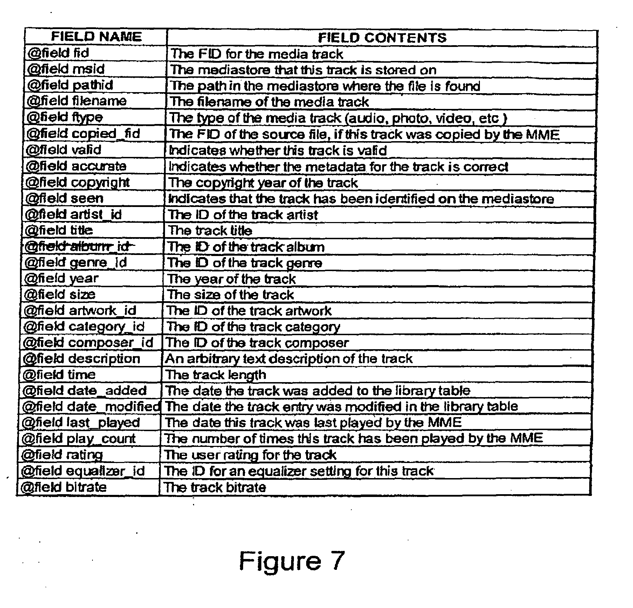

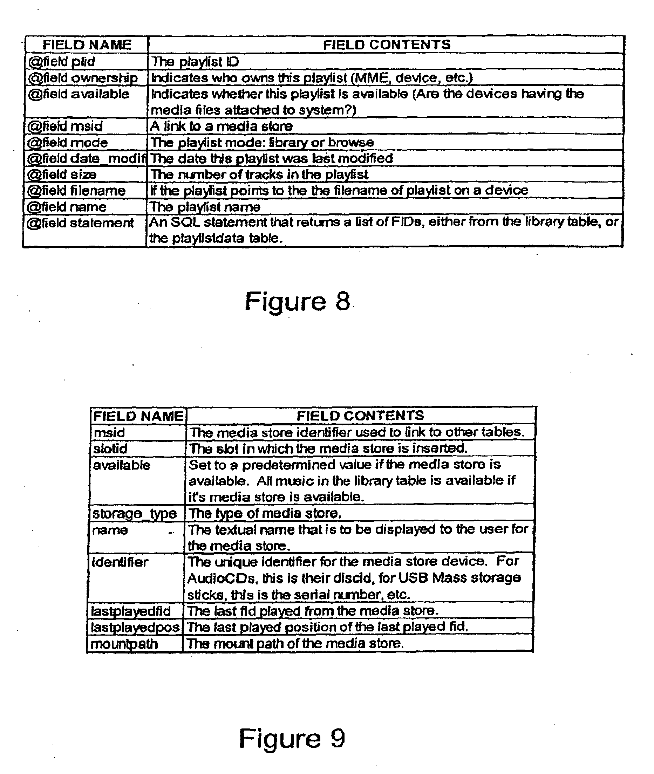

The records in database 225 may have a number of different structures depending on the requirements of the system. Some fields that may be used in such database records and their corresponding meaning are shown in the table of Figure 7. Exemplary fields that may be used in connection with a playlist table in database 225 are shown in Figure 8.

Database 225 also may include a media stores table. Each mediastore in the mediastores table describes one physical device containing media that the engine has seen. This could be an iPod, hard drive, USB stick, DVD Video disc, etc. Mediastores come and go as they are inserted and removed and this table is updated accordingly as that happens. All entries in the library table belong to one mediastore which is where the media is located. Mediastores are uniquely identified by an identifier that can be used to later attain the msid for the mediastore which links to the other tables. Figure 9 shows exemplary fields that may be used in connection with the media stores table.

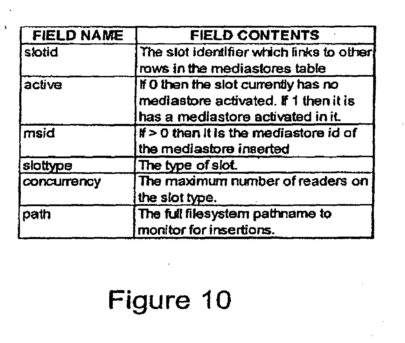

Still further, the database 225 may include a slots table. Slots may be used to define fileystem locations where mediastores can be connected and removed. For example, an audiocd may be found in the filesystem at location /fs/cd0. If it were a networked audiocd, it may be found at /net/remote_host/fs/cd0. The MME 205 may be designed to support an unlimited number of slots. Figure 10 shows exemplary fields that may be used in connection with the slots table.

The metadata corresponding to a file may be available on the media containing the file. However, it is also possible for an external source to add metadata to a file. Metadata for a file may include information regarding the music type and the group that produced the music. It is also possible to incorporate various additional types of metadata. For example, the metadata may include information on the quality of the content stored in the file. This quality information may be used in the selection of contents to be played for a user, or with certain license or other restrictions associated with the content.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A multimedia system comprising:
a database storing information relating to multimedia files stored on a plurality of multimedia data sources, where the multimedia file information from the plurality of multimedia data sources is consolidated in a commonly accessible format in the database;
a multimedia engine adapted to access the multimedia files and the database;
a human machine interface adapted to interact with the multimedia engine to provide a graphical interface for accessing the multimedia files based on the information stored on the database, where the interaction is generally independent of which of the plurality of multimedia data sources contain the multimedia files.

2. The multimedia system of claim 1, where the multimedia engine comprises synchronization software adapted to synchronize information relating to the multimedia files stored on the plurality of multimedia data sources with the information stored in the database.

3. The multimedia system of claim 2, where the synchronization software is adapted to synchronize metadata information relating to the multimedia files with the information stored in the database.

4. The multimedia system of claim 2, where the synchronization software is adapted to synchronize playlist information relating to the multimedia files with playlist information stored in the database.

5. The multimedia system of claim 1, where the database comprises a mediastores table including information describing one or more of physical devices identified by the multimedia engine.

6. The multimedia system of claim 1, where the database comprises a slots table including information corresponding to filesystem locations where mediastores can be connected and removed by the multimedia engine.

7. The multimedia system of claim 1, where the database comprises a main records table e and one or more linked tables, and where the main records table includes entries having information relating to individual multimedia files.

8. The multimedia system of claim 7, where individual entries in the main records table include mediastore information for a corresponding multimedia file, and where the mediastore information is linked to a mediastores table having information describing one or more of physical devices identified by the multimedia engine.

9. The multimedia system of claim 8, where the database comprises a slots table including information corresponding to filesystem locations where mediastores can be connected and removed by the multimedia engine.

10. A multimedia system comprising:
database means for storing information relating to multimedia files stored on a plurality of multimedia data sources, where the multimedia file information from the plurality of multimedia data sources is consolidated in a commonly accessible format in the database means;
multimedia engine means for accessing the multimedia files and the database;
human machine interface means for interacting with the multimedia engine means to provide a graphical interface for accessing the multimedia files based on the information stored on the database means, where the interaction is generally independent of which of the plurality of multimedia data sources contain the multimedia files.

11. The multimedia system of claim 10, where the multimedia engine means comprises synchronization means for synchronizing information relating to the multimedia files stored on the plurality of multimedia data sources with the information stored in the database means.

12. The multimedia system of claim 11, where the synchronization means is adapted to synchronize metadata information relating to the multimedia files with the information stored in the database means.

13. The multimedia system of claim 11, where the synchronization means is adapted to synchronize playlist information relating to the multimedia files with playlist information stored in the database means.

14. The multimedia system of claim 10, where the database means comprises mediastores table means for storing information describing one or more multimedia devices identified by the multimedia engine means.

15. The multimedia system of claim 10, where the database means comprises a slots table means for storing information corresponding to filesystem locations where mediastores can be connected and removed by the multimedia engine means.

16. A method for operating a multimedia system comprising:
storing information relating to multimedia files stored on a plurality of multimedia data sources in a database , where the multimedia file information from the plurality of multimedia data sources is consolidated in a commonly accessible format that is generally independent of the plurality of multimedia data sources on which the multimedia files are stored; and
interacting with the multimedia files based on the information stored in the database.

17. The method of claim 16, where the interacting comprises interacting with the multimedia files using a graphical user interface, where the graphical user interface is adapted to concurrently present information relating to multiple multimedia files without reference to where the multiple multimedia files are stored.

18. The method of claim 16, further comprising synchronizing information relating to the multimedia files stored on the plurality of multimedia data sources with the information stored in the database means.

19. The method of claim 16, further comprising generating a mediastores table having information describing one or more multimedia devices that have been connected to the multimedia system.

20. The method of claim 16, further comprising generating a slots table having information corresponding to filesystem locations where mediastores can be connected and removed by the multimedia system.
